# EUROPÄISCHE PATENTANMELDUNG

(11) **EP 0 797 037 A2**
(43) Veröffentlichungstag der Anmeldung: **24.09.1997**
(21) Anmeldenummer: 97810150.9
(22) Anmeldetag: 17.03.1997
(51) Int. Cl.: F16L 13/14, F16L 33/207

(54) **Schnell zu montierende Rohrverbindung**

(30) Priorität: 18.03.1996 CH 701/96
(71) Anmelder: GIACOMINI S.p.A., 28017 S. Maurizio d'Opaglio (NO) (IT)
(72) Erfinder: Giacomini, Marco, 28016 Orta San Giulio (IT)
(74) Vertreter: Gaggini, Carlo, Dipl.-Ing.

(57) **Zusammenfassung**

Die vorliegende Erfindung betrifft eine schnell zu montierende Rohrverbindung, dadurch gekennzeichnet, dass sie ein Verbindungsstück (1) aufweist, in dem ein Durchgang (3) mit einem Anschlag (4) versehen ist, gegen den das zu verbindende Rohr (5) zu liegen kommt. In der Richtung des Einschiebens des Rohrs gesehen vor dem Anschlag ist ein mit mehreren kreisförmigen Rippen (9) versehener Befestigungsbereich (8) vorgesehen, der zur Befestigung des Rohrs radial in solcher Weise plastisch verformt wird, das sich sein Durchmesser gegen das Ende des Verbindungsstücks (1) hin verringert. Eine in einer ringförmigen Nut (6) untergebrachte elastische Dichtung (7) sorgt für die Abdichtung der Rohrverbindung.

Der Vorteil der erfindungsgemässen Rohrverbindung liegt in ihrer grossen Einfachheit, da lediglich eine möglichst kleine Zahl von Elementen verwendet wird, in ihren geringen Herstellkosten sowie ihrer hohen Abdichtung und mechanischen Widerstandsfähigkeit dank der Optimierung der entsprechenden Funktionen.

## Beschreibung

Die vorliegende Erfindung betrifft eine schnell zu montierende Rohrverbindung gemäss dem Oberbegriff des Patentanspruchs 1 sowie ein Verfahren zum Einbau der Rohrverbindung gemäss dem Anspruch 10 und ein Werkzeug gemäss dem Anspruch 11 zur Ausübung des erfindungsgemässen Verfahrens .

Schnell zu montierende Rohrverbindungen solcher Art finden heute beim Bau von pneumatischen oder hydraulischen Anlagen vieler Art Anwendung, wo komplexe Rohrleitungssysteme zur Verteilung eines Fluid-Stroms an eine Vielzahl von z.B. Verbraucher-Apparaten zu erstellen sind. Ein typisches Anwendungsbeispiel ist der Bau von Zentralheizungsanlagen in Wohnhäusern, wo eine Vielzahl von Heizkörpern, durch die Warmwasser strömt, mit einem Vorlauf-Zuleitungssystem für das Heisswasser und mit einem Rücklauf-Leitungssystem für das kühlere Wasser verbunden werden müssen.

Die Rohrverbindungen müssen einer Reihe hauptsächlicher Anforderungen genügen, nämlich:
- Sicherstellen absoluter Abdichtung des Fluids und des unbehinderten Durchgangs des Fluids;
- Rasch, sicher und leicht auszuführende Montage auf der Baustelle mit einem Minimum an Montagewerkzeugen;
- Einfache und kostengünstige Ausführung;
- Anwendbarkeit als Rohrverbindung für Rohre aus verschiedenen Werkstoffen wie Metallen oder Kunststoffen.

Für das hier in Aussicht genommene Anwendungsgebiet sind alle diese Kriterien wichtig, zwei davon , nämlich jenes der Sicherstellung einer absolut dichten Verbindung und jenes der schnell ausführbaren Montage, spielen jedoch eine ausschlaggebende Rolle.

In der Anwendungpraxis und aus der Patentliteratur ist bereits eine ganze Reihe von Lösungen des genannten Problems bekannt. So ist z.B. aus der CH-A-5455937 eine Rohrverbindung mit einem Verbindungsstück bekannt, das aussen ein Gewinde trägt und in eine Büchse eingeschraubt werden kann, sowie mit einer Durchgangsöffnung, die einen Anschlag für das eingeführte Rohrende aufweist. Im Verbindungsstück entspricht der Durchgangs-Durchmesser nach dem Anschlag im Wesentlichen dem Innendurchmesser des Rohrs, das bis zum Anschlag eingeschoben wird, so dass die lichte Weite des Durchgangs unverändert bleibt und dass vorteilhafterweise das Fluid die Verbindungsstelle durchströmt, ohne irgendeinem einem Widerstand zu begegnen. Die Befestigung des Rohrs im Verbindungsstück wird dadurch bewerkstelligt, dass das Verbindungsstück auf seiner offenen Seite einen Bereich mit einem Innendurchmesser aufweist, der grösser ist als der Aussendurchmesser des Rohrs, der sich über einen konischen Bereich an dem zunächst beim Anschlag liegenden Bereich anschliesst, wo der Durchmesser im Wesentlichen dem Aussendurchmesser des Rohrs entspricht. Zwischen dem konischen Bereich und der Oeffnung des Verbindungsstücks, in die das zu verbindende Rohr eingeführt wird, trägt die Innenfläche des Verbindungsstücks ein Gewinde, in das eine Büchse eingeschraubt werden kann, die auf ihrer inneren Verschraubungsfläche mit einem keilförmigen Bereich versehen ist. Zwischen den beiden keilförmigen Flächen wird bei der Montage ein Befestigungsring von im Wesentlichen rechteckigem Querschnitt eingelegt. Wenn die Büchse in das Verbindungsstück eingeschraubt wird, stösst ihr konischer Bereich den fixierenden Ring gegen den konischen Bereich am Verbindungsstück, so dass sich der Ring dazwischen verformt, sich aufwölbt und in die Aussenfläche des Rohrs in zwei Bereichen eindringt. Diese Verformung des Befestigungsrings und der Rohroberfläche dient dabei sowohl zur axialen Befestigung des Rohrs im Verbindungsstück als auch zum Abdichten der Rohrverbindung. Der verformbare Ring übernimmt also eine Doppelfunktion.

Die oben beschriebene Lösung stellt nur eine von zahlreichen gemäss dem Stand der Technik bekannten Lösungen dar, bei denen zur Schaffung einer schnell zu montierenden Rohrverbindung das Prinzip der Verformung eines separaten Rings zur Anwendung kommt, der zwischen dem Rohr und dem Verbindungsstück eingelegt und unter Einwirkung einer axial über ein drittes Verbindungselement, z.B. eine auf das Verbindungsstück aufzuschraubende Büchse, auf diesen wirkenden Kraft radial verformt wird.

Beispiele von Lösungen dieser Art sind beispielsweise in der CH-A-628128, DE-A-3610427 und CH-A-672013 gezeigt.

Allen diesen Lösungen haftet vor allem der Nachteil an, dass ein zusätzlicher Befestigungsring angewendet wird, der unter der Einwirkung einer axialen Kraft durch eine auf das Verbindungsstück aufgeschraubte Büchse verformt wird. Es handelt sich dabei also um Rohrverbindungen, die mindestens drei getrennte Elemente erfordern (wobei, wie in anderen Fällen, noch weitere zusätzliche Elemente, wie separate Dichtungen oder Halte-Büchsen, usw., hinzukommen) und die darüber hinaus erfordern, dass zum Anziehen der Verbindung eine Büchse auf das Verbindungsstück aufzuschrauben ist. Dieser Vorgang ist oft heikel und erfordert einen Zeitaufwand, der nicht vernachlässigbar ist. Zudem ist das Aufschrauben der Büchse zum Zweck der Verformung des Befestigungsrings mit grosser Sorgfalt auszuführen, damit weder der Befestigungsring noch der Halt der Rohrverbindung beschädigt werden.

Ziel der vorliegenden Erfindung ist daher, eine Rohrverbindung zu schaffen, die möglichst wenige Elemente aufweist, die schnell und zuverlässig montiert werden kann, und die bei geringen Kosten dennoch eine absolute Abdichtung der hergestellten Verbindung gewährleistet.

Diese Zielsetzungen werden erreicht mittels einer Rohrverbindung gemäss dem kennzeichnenden Teil des Anspruchs 1.

Der Anspruch 10 betrifft ein Verfahren zur Ausführung der erfindungsgemässen Rohrverbindung, welche eine besonders schnelle Montage erlaubt, während der Anspruch 11 ein Werkzeug für die Anwendung des Verfahrens gemäss dem Patentanspruch 10 betrifft.

Weitere Vorzüge der vorliegenden Erfindung sind im Folgenden anhand einer Reihe von besonderen Lösungen unter Bezugnahme auf die entsprechenden Abbildungen näher beschrieben. Es zeigen:
Fig. 1 einen Längsschnitt durch die erfindungsgemässe Rohrverbindung, bei der ein Rohr teilweise in das Verbindungsstück eingeschoben, aber noch nicht darin befestigt ist;
Fig. 2 die Rohrverbindung gemäss Fig. 1 nach ihrer Befestigung im Verbindungsstück;
Fig. 3 eine besonders vorteilhafte Ausführungsform der erfindungsgemässen Rohrverbindung mit Rippen von dreieckigem Querschnitt vor der Befestigung des Rohrs;
Fig. 4 die gleiche Ausführungsform gemäss der Fig. 3 nach der Befestigung des im Verbindungsstück eingeschobenen Rohrs;
Fig. 5 eine andere bevorzugte Ausführungsform der erfindungsgemässen Rohrverbindung mit axial ausgerichteten Kerben zur Vermeidung einer Verdrehung des in der Rohrverbindung befestigten Rohrs, dargestellt in einem Längsschnitt entsprechend den Figuren 3 und 4 sowie in einem Querschnitt längs der Linie A-A;
Fig. 6 eine schematische, perspektivische Darstellung eines Werkzeugs zur Anwendung des Verfahrens zur Ausführung der erfindungsgemässen Rohrverbindung gemäss dem Anspruch 10.

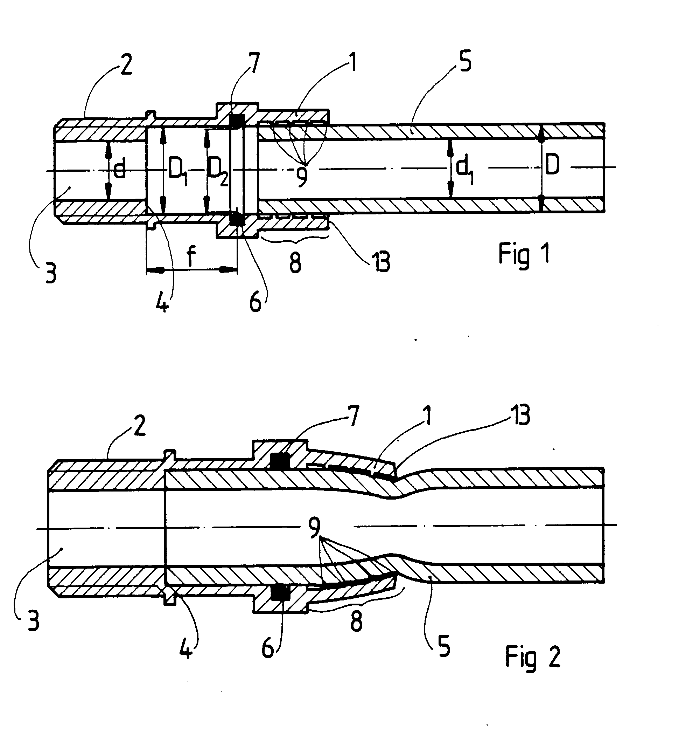

In der Fig. 1 ist eine erfindungsgemässe Rohrverbindung im Längsschnitt gezeigt, wobei das zu verbindende Rohr erst teilweise in das Verbindungsstück eingeschoben und noch nicht festgeklemmt ist. Mit 1 ist das Verbindungsstück bezeichnet, das auf einem Bereich 2 aussen ein Gewinde trägt, damit es in eine Büchse (nicht gezeigt) eingeschraubt werden kann, und mit einem Durchgang 3 durch das Verbindungsstück 1.

Der Durchgang 3 weist einen Anschlag 4 für das Rohr 5 auf, das gemäss der Fig. 1 erst teilweise in das Verbindungsstück 1 eingeschoben ist, während in der Fig. 2, welche die gleiche Rohrverbindung im befestigten Zustand zeigt, das Rohr 5 bis zum Anschlag 4 in das Verbindungsstück eingeschoben ist. Der Durchmesser d des Durchgangs 3 nach dem Anschlag 4, d.h. auf dem Teil, der jenem gegenüberliegt, an dem das Rohr 5 im Verbindungsstück anliegt, entspricht im wesentlichen dem Innendurchmesser d₁ des Rohrs 5, das in den Durchgang 3 eingeschoben wird. Der Aussendurchmesser des Rohrs 5 hingegen muss offensichtlich dem Durchmesser D₁ des Durchgangs 3 vor dem Anschlag 4 entsprechen, d.h. das Rohr 5 muss in den Durchgang 3 des Verbindungsstücks 1 eingeschoben werden können, ohne sich besonders zu verformen. Normalerweise wird zur Erleichterung der Montage der Aussendurchmesser D des Rohrs 5 etwas kleiner gewählt (beispielsweise einige Zehntelmillimeter) als der Innendurchmesser D₁ des Durchgangs 3 vor dem Anschlag 4, so dass das Rohr 5 ohne Anstrengung (abgesehen vom Kraftaufwand, der zur radialen Verformung der Dichtung erforderlich ist, die den Anschluss dicht hält, wie dies später erklärt wird) bis zum Anschlag 4 in das Verbindungsstück 1 eingeschoben werden kann.

Die schnell zu montierende Rohrverbindung weist vor dem Anschlag 4 in der Richtung, in der das Rohr 5 eingeschoben wird, nacheinander die folgenden Elemente auf:
- Einen Befestigungsbereich 8 mit mehreren kreisförmigen Rippen, die auf der Innenfläche des Durchgangs 3 in solcher Weise angeordnet sind, dass sie während des Befestigungsvorgangs des Rohrs 5 im Verbindungsstück 1 das freie Einschieben des Rohrs 5 nicht behindern. Zur Befestigung der Verbindung wird, wie in der Fig. 2 gezeigt, der Befestigungsbereich 8 radial in solcher Weise plastisch verformt, dass sich sein Durchmesser gegen das Ende des Verbindungsstücks 1 hin zunehmend verringert. In dieser Weise, wie aus der Fig. 2 ersichtlich ist, in der zur besseren Verständlichkeit der Darstellung die plastische Verformung des Befestigungbereichs und die dadurch hervorgerufene Verformung des Rohrs 5 übertrieben dargestellt sind, drücken die auf der Innenseite des Befestigungsbereichs angebrachten kreisförmigen Rippen 9 auf das Rohr 5 und können dabei auch in das Rohr 5 eindringen und es über seinen Umfang lokal verformen, so dass das Rohr 5 fest im Verbindungsstück 1 verankert wird.
- Eine ringförmige Nut 6, in der eine elastische Dichtung 7 untergebracht ist, die sich verformt, während das Rohr 5 in den Durchgang 3 eingeschoben wird. Die Abmessungen der elastischen Dichtung 7, insbesondere deren Innendurchmesser D_{2,} werden deshalb so gewählt, dass die Dichtung 7 durch das Rohr 5 verformt wird und gegen den Grund der ringförmigen Nut 6 gedrückt wird. Der von der elastischen Dichtung 7 auf die Aussenfläche des Rohrs 5 und auf den Grund der ringförmigen Nut 6 nach dem in der Fig. 2 dargestellten Einschieben des Rohrs 5 in das Verbindungsstück 1 ausgeübte Druck stellt die absolute Abdichtung der Verbindung nach der Montage sicher. Damit sei ausdrücklich festgestellt, dass die Abdichtung der schnell zu montierenden Rohrverbindung gemäss der vorliegenden Erfindung auf dem Vorhandensein einer verformbaren elastischen Dichtung beruht, die auf zwei Seiten, einerseits gegen das Rohr 5 und andererseits gegen das Verbindungsstück 1 zusammengedrückt wird. Aehnlich abdichtende elastisch verformbare Dichtungen 6 gelangen sowohl in schnell zu montierenden als in anderen Rohrverbindungen häufig zur Verwendung, so dass diese als bekannt betrachtet werden können und keiner näheren Erklärung bedürfen.

Hingegen ist hier festzuhalten, dass gemäss der vorliegenden Erfindung die Verformung des Befestigungsbereichs 8 im vorerwähnten Sinn eine mehr oder weniger starke Verformung des Durchmessers des Rohrs 5 hervorrufen kann, je nach dem Werkstoff, aus dem das Rohr 5 hergestellt ist, oder dass die kreisförmigen Rippen 9 in das Material, aus dem das Rohr 5 hergestellt ist, eindringen können, aber nicht müssen, in solcher Weise dass zwar dessen Oberfläche geritzt wird, jedoch ohne dass dessen mechanische Festigkeit angegriffen wird. Dieser Aspekt ist jedoch im Rahmen der vorliegenden Erfindung nicht wesentlich, bei der das Problem der Abdichtung, wie bereits erwähnt, dank der Verwendung einer geeigneten elastischen Dichtung 7 gelöst wird, während der Befestigungsbereich 8 ausschliesslich die Aufgabe hat, eine angemessene mechanische Festigkeit der hergestellten Verbindung sicherzustellen. Diese Aufgabentrennung der Sicherstellung der Abdichtung der Verbindung und der Gewährleistung einer genügenden mechanischen Festigkeit bildet hingegen ein wesentliches Merkmal der vorliegenden Erfindung, die dank den erwähnten Elementen optimal bewerkstelligt werden kann.

Gemäss einer ersten bevorzugten Ausführungsform der vorliegenden Erfindung besteht das Verbindungsstück 1 aus einem metallischen Werkstoff, vorzugsweise aus Messing. In diesem Zusammenhang ist zu betonen, dass die Materialwahl für das Verbindungsstück 1 von verschiedenen Faktoren bestimmt ist, die zum Teil mit der Art des zu verbindenden Rohrs zusammenhängen. Hier seien die wichtigsten dieser Faktoren aufgezählt:
- Plastische Verformbarkeit des Befestigungsbereichs 8 des Verbindungsstücks 1, die ein genügendes Zusammendrücken des Rohrs 5 und damit eine genügend widerstandsfähige Befestigung gewährleistet;
- Eignung zur spanenden Bearbeitung und zum Pressen bzw. Schmieden des Verbindungs-Rohlings;
- Herstellungskosten der Verbindung;
- Physikalische und chemische Eigenschaften der ausgeführten Verbindung bzw. der Paarung Verbindungsstück/Rohr, die keine Korrosionsprobleme infolge unerwünschter elektrischer Potentiale hervorrufen dürfen.

Messing hat sich für die meisten der in Betracht gezogenen Verbindungen als ideal geeigneter Werkstoff erwiesen. Natürlich können in besonderen Fällen auch andere Metalle (Rostfreier Stahl, Bronze, usw.) zur Herstellung der erfindungsgemässen Rohrverbindung verwendet werden.

Gemäss einer anderen bevorzugten Ausführungsform der vorliegenden Erfindung ist das Rohr 5 aus einem Kunststoffmaterial hergestellt, das aus einer reichen Auswahl von Kunststoffen gewählt werden kann, von Polyamiden über Polyester zu Polypropylenen und Polyethylenen, usw., aus denen heute Rohre hergestellt werden können.

In einer weiteren bevorzugten Ausführungsform der vorliegenden Erfindung besteht die elastische Dichtung 7 aus natürlichem oder synthetischem Gummi und ist eine ringförmige Dichtung von kreisrundem Querschnitt, die im Handel unter dem Namen O-Ring bekannt ist. Die Verwendung solcher O-Ring-Dichtungen ist besonders angezeigt, da solche Ringe leicht anwendbar sind, wobei sie in ihren Nuten ohne Gefahr einer Beschädigung, die bei ausgeklügelteren Ringen mit elastischer Zunge besteht, eingelegt werden können, und wegen ihrer geringen Herstellkosten.

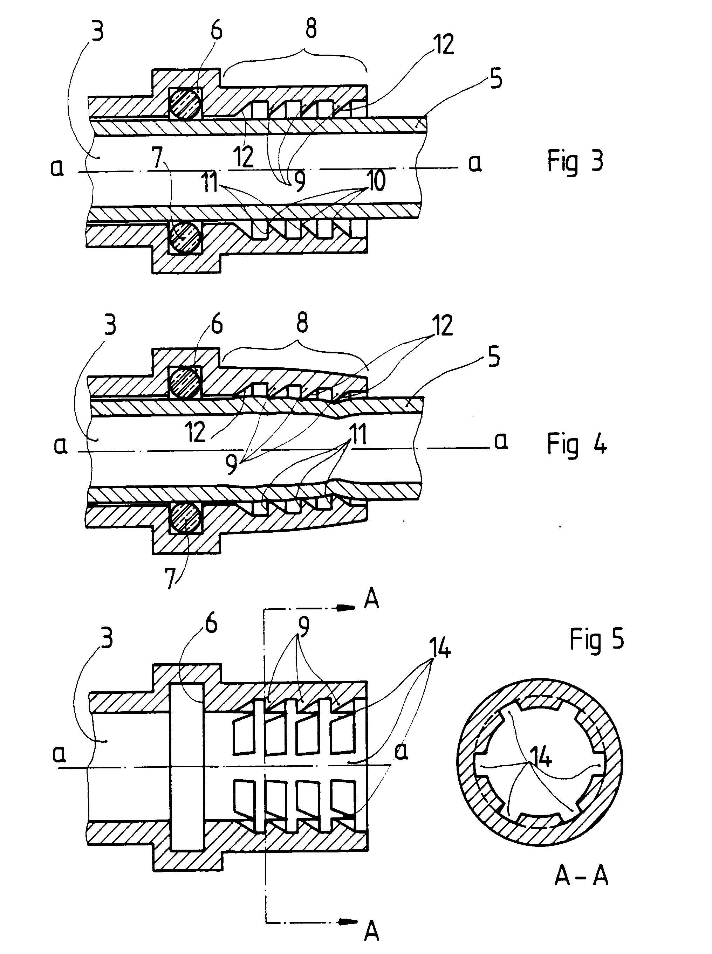

Entsprechend einer weiteren bevorzugten Ausführungsform der Erfindung, die in den Figuren 3 und 4 in einem Längsschnitt durch eine schnell zu montierende Rohrverbindung gemäss der vorliegenden Erfindung dargestellt ist, weisen die kreisförmigen Rippen 9 einen dreieckigen Querschnitt auf mit einer Dreieckspitze 10, die in die äussere Oberfläche des Rohrs 5 eindringt, wenn der Befestigungsbereich 8 verformt wird. Die Ausformung der Spitzen 10 im Profil der kreisförmigen Rippen 9 gewährleistet eine bessere Verankerung des Rohrs 5 im Verbindungsstück 1. Natürlich hängt dabei die Anwendbarkeit spitz ausgebildeter Rippenprofile von dem für das Rohr 5 gewählten Werkstoff ab, da die Rippen 9 auf keinen Fall die Wand des Rohrs 5 beschädigen und deren mechanische Widerstandsfähigkeit gefährden dürfen. Die Wahl des Profils der Rippen 9 basiert also hauptsächlich auf einer Optimierung zwischen den Eigenschaften der mechanischen Widerstandsfähigkeit der hergestellten Verbindung und den physikalischen Eigenschaften des für das Rohr 5 gewählten Werkstoffes.

In einer anderen bevorzugten Ausführungsform der Erfindung, die ebenfalls in den Figuren 3 und 4 dargestellt ist, weisen die Rippen 9 ein Sägezahnprofil auf mit einer im Wesentlichen senkrecht zur Achse a-a des Durchgangs 3 im Verbindungsstück 1 stehenden Flanke, während die andere Flanke 12 gegenüber der Achse a-a des Durchgangs gegen das freie Ende des Befestigungsbereichs 8 hin von der Achse a-a weg geneigt ist, d.h. gegen die Seite hin, von der her das Rohr 5 in das Verbindungsstück 1 eingeschoben wird.

Das Sägezahnprofil der Rippen 9 bietet den Vorteil, dass das Rohr 5 leicht in das Verbindungsstück 1 eingeschoben werden kann, da die Sägezahnprofile der Rippen 9 in der Einschiebe-Richtung des Rohrs geneigt sind. Hingegen wirken diese Zahnprofile bei Verformung des Befestigungsbereichs 8 durch Zusammendrücken gegen das Rohr 5 einer allfälligen Tendenz des Rohrs 5 entgegen, aus dem Verbindungsstück 1 hinauszugleiten, da sie versuchen, sich in die Aussenfläche des Rohrs einzugraben. Diese Lösung erlaubt daher die Erstellung schnell zu montierender Rohrverbindungen, die einem Auseinandergleiten grossen mechanischen Widerstand entgegensetzen.

Bei einer weiteren bevorzugten Ausführungsform der Erfindung hat sich als besonders vorteilhaft erwiesen, wenn in einer schnell zu montierenden Rohrverbindung der Abstand f zwischen der abdichtenden Dichtung 7 und dem Anschlag 4 für das Rohr 5 ungefähr dem Abstand zwischen der abdichtenden Dichtung 7 und dem offenen äusseren Ende 13 des Befestigungsbereiches 8 entspricht. Diese Angabe erlaubt, schnell zu montierende Rohrverbindungen so zu dimensionieren, dass sie optimale Eigenschaften aufweisen.

Bei der erfindungsgemässen schnell zu montierenden Rohrverbindung können gute Resultate erreichr werden, wenn das Rohr 5 einen Aussendurchmesser D zwischen 5 und 25 mm und eine Wanddicke (D-d₁)/2 zwischen 1 und 3 mm aufweist. Dies ist der bevorzugte Anwendungsbereich der schnell zu montierenden Rohrverbindung, die Gegenstand der vorliegenden Erfindung ist.

In einer weiteren bevorzugten Ausführungsform der erfindungsgemässen schnell zu montierenden Rohrverbindung, die speziell eine weitere Verbesserung der Eigenschaften der mechanischen Widerstandsfähigkeit gegen die Gefahr einer Verdrehung des Rohrs 5 im Verbindungsstück 1 anstrebt, ist vorgesehen, dass mindestens einige der Rippen 9, wie dies in der Fig. 5 und im entsprechenden Querschnitt durch die Achse a-a der Verbindung längs der Linie A-A dargestellt ist, mit axial in Längsrichtung, d.h. parallel zur Achse a-a der Verbindung ausgerichteten Kerben 14 versehen sind. Solche Kerben oder Ausnehmungen 14 verhindern nach der Befestigung der Verbindung in der vorher beschriebenen Weise eine Drehung des Rohrs 5 gegenüber dem Verbindungsstück 1 (wobei das Rohr 5 in der Fig. 5 und im entsprechenden Schnitt A-A, welche die Verbindung vor dem Einbau des Rohrs 5 darstellen, nicht gezeigt ist). Diese Wirkung beruht auf lokaler Verformung des Rohrs 5, das - wenn auch nur geringfügig - in die Ausnehmungen der Kerben 14 eindringt, wodurch es sich so verankert, dass es sich der Drehung des Rohrs 5 im Verbindungsstück 1 widersetzt. Anzahl, Anordnung und Profil der Kerben 14 werden entsprechend den physikalischen Eigenschaften der Werkstoffe festgelegt, aus denen die Verbindung besteht, und je nach den Beanspruchungen, die eine Verdrehungsgefahr des Rohrs 5 im Verbindungsstück 1 zur Folge haben könnten. Normalerweise genügt eine einzige axiale Einkerbung 14, um das gewünschte Resultat zu erreichen.

Das erfindungsgemässe Verfahren zur Ausführung der schnell zu montierenden Rohrverbindung gemäss der vorliegenden Erfindung sieht den folgenden Ablauf von Verfahrensschritten vor:
a) Zuerst wird das Rohr 5 in den Durchgang 3 des Verbindungsstück 1 eingeschoben, wobei die elastische Dichtung 7 lokal leicht verformt wird und dadurch eine abdichtende Dichtung bildet;
b) Mittels eines Befestigungswerkzeuges wird danach der Befestigungsbereich 8 durch allseitig gleichmässig radial auf ihn ausgeübten Druck radial verformt. Dadurch verformt sich der Befestigungsbereich 8 konisch in solcher Weise, dass er sich gegen das offene Ende 13 des Verbindungsstückes 1 hin verjüngt.

Dieses Verfahren zur Ausführung der schnell zu montierenden Rohrverbindung umfasst lediglich zwei Verfahrensschritte, deren erster nur im Einschieben des Rohrs 5 in das Verbindungsstück 1 besteht, wobei praktisch keinerlei Widerstand (ausser jenem zur leichten Verformung der elastischen Dichtung 7) auftritt, ist äusserst einfach und schnell zu bewerkstelligen. Auch der Verfahrensschritt der Verformung des Befestigungsbereichs, der mit Hilfe eines besonderen Werkzeugs bewerkstelligt wird, gestaltet sich ausserordentlich schnell und einfach. Die schnell zu montierende Rohrverbindung ist zuverlässig und gewährleistet beste Voraussetzungen für optimale Abdichtung und mechanische Widerstandsfähigkeit, wenn auch zu betonen ist, dass die Verbindung permanent ist, wobei also keine rasche Demontage zum Auseinandertrennen der Rohre vorgesehen ist. Die erfindungsgemässe Verbindungsart stellt sicher, wie es heute bei der Einrichtung von Heizungsanlagen immer häufiger verlangt wird, dass die Verbindung schnell und kostengünstig erstellt werden kann und die Abdichtung über lange Zeiträume gewährleistet, wobei die Anlage auch keine Elemente aufweist, die sich beispielsweise unter Einwirkung von Vibrationen oder Erscheinungen wie extreme Temperaturschwankungen lösen könnten und dadurch die Funtionstüchtigkeit der Verbindung gefährden könnten.

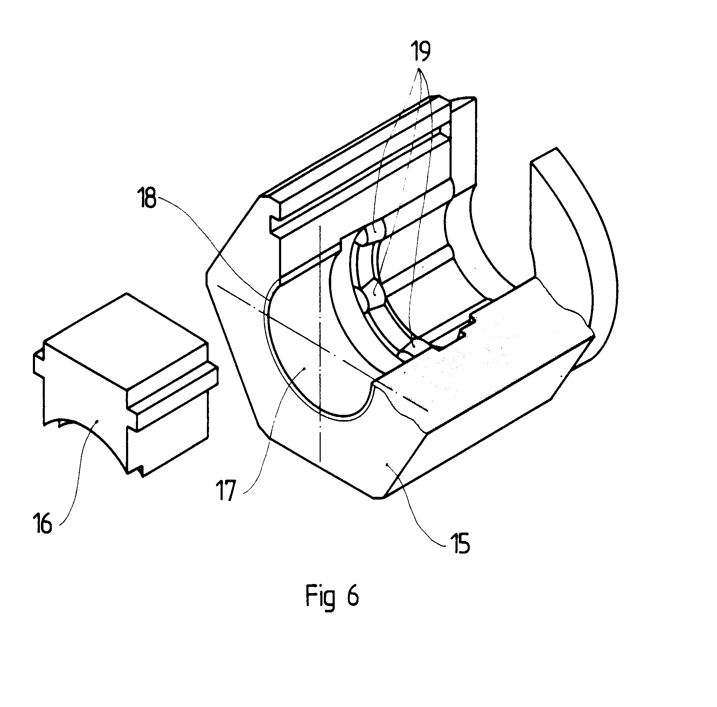

Ein bevorzugtes Werkzeug zur Ausübung des Verfahrens zur Ausführung der erfindungsgemässen Verbindung ist im Sinne eines Beispiels in der Fig. 6 in perspektivischer Darstellung gezeigt. Das Werkzeug besteht aus einem aus zwei Teilen 15 und 16 zusammengesetzten Körper, der einen zylindrischen Durchgang 17 aufweist, der eine mit einem Gewinde versehene Partie 18 umfasst, welche nach vorübergehender Entfernung des Teils 16 des Körpers auf das Gewinde der mit einem Gewinde versehenen Partie des Verbindungsstücks 1 aufgeschraubt werden kann, und der eine mit kegelförmigen Rollen 19 versehenen Partie aufweist, die beim Aufschraubens des Werkzeugs auf das Verbindungsstücks dank der axialen Verschiebung des Werkzeugs auf dem Verbindungsstücks zunehmend mit dem äusseren Rand des Befestigungsbereichs 8 (Fig. 1) in Kontakt kommen, wobei sich letzterer radial so verformt, dass die angestrebte Verjüngung des Durchmessers des Verbindungsstücks 1 und damit die sich daraus ergebende Befestigung der Verbindung hervorgerufen werden.

Ausschlaggebend für das erfindungsgemässe Werkzeug zur Ausführung der schnell zu montierenden Rohrverbindung gemäss der vorliegenden Erfindung ist dabei einzig, dass die radiale Verformung des Befestigungsbereichs 8 des Verbindungsstücks 1 durch das Rollen des offenen Endes 13 mittels Drehen einer oder mehrerer gegen diesen Bereich gedrückter kegelförmiger Rollen unter gleichzeitiger axialer Verschiebung des Werkzeugs gegenüber dem Verbindungsstück 1 bewerkstelligt wird . Der Vorteil dieses Werkzeugs liegt darin, dass es einfach zu bedienen ist und schnelles und genaues Arbeiten erlaubt. Das Drehen des Werkzeugs kann von Hand mittels eines geeigneten Schraubenschlüssels bewerkstelligt werden, oder das Werkzeug selbst kann mit Mitteln für mehr oder weniger automatisierten Drehantrieb versehen werden.

### LISTE DER IN DEN FIGUREN DARGESTELLTEN ELEMENTE

- 1: Verbindungsstück
- 2: Bereich mit aussen angebrachtem Gewinde
- 3: Durchgang
- 4: Anschlag
- 5: Rohr
- 6: Ringförmige Nut
- 7: Elastische Dichtung
- 8: Befestigungsbereich
- 9: kreisförmige Rippen
- 10: Spitzenprofil der Rippe 9
- 11: Flanke der Rippe 9
- 12: Geneigte Flanke der Rippe 9
- 13: Endöffnung
- 14: Kerben
- 15: Erster Teil des Werkzeugs
- 16: Zweiter Teil des Werkzeugs
- 17: Durchgang
- 18: Bereich mit Gewinde
- 19: Kegelförmige Rollen

## Patentansprüche

1. Schnell zu montierende Rohrverbindung mit einem Verbindungsstück (1), das einen auf der Aussenseite mit einem Gewinde versehenen Bereich (2) umfasst, auf den eine Büchse aufgeschraubt werden kann, sowie einen Durchgang (3) mit einem darin vorgesehenen Anschlag (4), gegen den das Rohr (5) zu liegen kommt, wenn es eingeschoben wird, wobei der Durchmesser (d) des Durchgangs (3) nach dem Anschlag (4) im Wesentlichen dem Innendurchmesser (d₁) des Rohrs (5) entspricht, das bis zum Anschlag (4) in den Durchgang (3) eingeschoben wird,
**dadurch gekennzeichnet, dass**
der Durchgang (3) im Verbindungsstück (1), in der Richtung des Einschiebens des Rohrs (5) gesehen, vor dem Anschlag (4) nacheinander die folgenden Elemente aufweist:
- Einen Befestigungsbereich (8) mit mehreren kreisförmigen Rippen (9), die auf der Innenfläche des Durchgangs (3) in solcher Weise angeordnet sind, dass sie während des Befestigungsvorgangs des Rohrs (5) im Verbindungsstück (1) das freie Einschieben des Rohrs (5) nicht behindern, wobei sodann zur Befestigung der Verbindung der Befestigungsbereich (8) radial in solcher Weise plastisch verformt wird, dass sich sein Durchmesser gegen das Ende des Verbindungsstücks (1) hin zunehmend verringert, so dass die kreisförmigen Rippen (9), die auf der Innenseite des Befestigungsbereichs angebracht sind, auf das Rohr (5) drücken und es über seinen Umfang lokal so verformen, dass das Rohr (5) fest im Verbindungsstück (1) verankert wird.
- Eine ringförmige Nut (6), in der eine elastische Dichtung (7) untergebracht ist, die sich verformt, wenn das Rohr (5) in den Durchgang (3) eingeschoben wird, und die eine abdichtende Dichtung bildet.

2. Schnell zu montierende Rohrverbindung gemäss Anspruch 1,
**dadurch gekennzeichnet, dass**
das Verbindungsstück (1) aus einem metallischen Werkstoff besteht, vorzugsweise aus Messing.

3. Schnell zu montierende Rohrverbindung gemäss Anspruch 1,
**dadurch gekennzeichnet, dass**
das Rohr (5) aus einem Kunststoffmaterial besteht.

4. Schnell zu montierende Rohrverbindung gemäss Anspruch 1,
**dadurch gekennzeichnet, dass**
die Dichtung (7) eine aus Gummi bestehende Dichtung ist, insbesondere eine ringförmige Dichtung mit kreisrundem Profil-Querschnitt.

5. Schnell zu montierende Rohrverbindung gemäss Anspruch 1,
**dadurch gekennzeichnet, dass**
die Rippen (9) ein dreieckförmiges Profil mit einer Spitze (10) aufweisen, die bei der Verformung des Befestigungsbereichs (8) in die äussere Oberfläche des Rohrs (5) eindringt.

6. Schnell zu montierende Rohrverbindung gemäss Anspruch 1,
**dadurch gekennzeichnet, dass**
die Rippen (9) ein sägezahnförmiges Profil mit einer Flanke (11) aufweist, die im Wesentlichen senkrecht zur Achse (a-a) des Durchgangs (3) ausgerichtet ist, und dessen andere Flanke (12) gegenüber der Achse (a-a) des Durchgangs (3) so geneigt ist, dass sie sich gegen das freie Ende des Befestigungsbereichs (8) hin von der Achse (a-a) entfernt.

7. Schnell zu montierende Rohrverbindung gemäss Anspruch 1,
**dadurch gekennzeichnet, dass**
der Abstand (f) zwischen der abdichtenden Dichtung (7) und dem Anschlag (4) für das Rohr (5) ungefähr dem Abstand zwischen der abdichtenden Dichtung (7) und dem offenen Ende (13) des Befestigungsbereichs (8) der Verbindung entspricht.

8. Schnell zu montierende Rohrverbindung gemäss Anspruch 1,
**dadurch gekennzeichnet, dass**
das Rohr (5) einen Aussendurchmesser (D) zwischen 5 und 25 mm und eine Wandstärke (D-d₁)/2 zwischen 1 und 3 mm aufweist.

9. Schnell zu montierende Rohrverbindung gemäss Anspruch 1,
**dadurch gekennzeichnet, dass**
mindestens einige der Rippen (9) Kerben (14) aufweisen, die in Achsrichtung der Verbindung verlaufen, und die nach Befestigung der Verbindung das Verdrehen des Rohrs (5) im Verbindungsstück (1) verhindern.

10. Verfahren zur Ausführung der schnell zu montierenden Rohrverbindung nach irgendeinem der Ansprüche 1 bis 9;
**dadurch gekennzeichnet, dass**
zur Befestigung der Verbindung zunächst das Rohr (5) in den Durchgang (3) des Verbindungsstücks (1) eingeschoben wird, wobei die elastische Dichtung (7) lokal in solcher Weise verformt wird, dass sie eine abdichtende Dichtung bildet, und dass sodann mit Hilfe eines Befestigungswerkzeug der Befestigungsbereich (8) allseitig radial in solcher Weise verformt wird, dass sich der genannte Bereich (8) gegen das offene Ende (13) des Verbindungsstücks (1) hin konisch verjüngt.

11. Werkzeug zur Ausübung des Verfahrens gemäss Anspruch 10,
**dadurch gekennzeichnet, dass**
das Werkzeug aus zwei Teilen (15 und 16) besteht, die mit einem zylindrischen Durchgang (17) versehen sind, der einen mit einem Gewinde versehenen Bereich (18) umfasst, das nach vorübergehender Entfernung eines der Teile (16) des Werkzeugs (15,16) auf den mit einem Gewinde versehenen Bereich des Verbindungsstücks (1) aufgeschraubt werden kann, sowie mit einem mit kegelförmigen Rollen (19) versehenen Teil, welche beim Aufschrauben des Werkzeugs auf das Verbindungsstück (1) zunehmend mit dem äusseren Rand des Befestigungsbereichs (1) in Kontakt treten, der infolge der axialen Verschiebung des Werkzeugs gegenüber dem Verbindungsstück (1) radial verformt wird, wobei die angestrebte Verringerung des Durchmessers des Verbindungsstücks (1) und somit die Befestigung der Verbindung erfolgt.
